# EUROPÄISCHE PATENTSCHRIFT

(11) **EP 2 802 683 B1**
(45) Veröffentlichungstag und Bekanntmachung des Hinweises auf die Patenterteilung: **31.05.2017**
(21) Anmeldenummer: 13715926.5
(22) Anmeldetag: 27.03.2013
(51) Int. Cl.: C23C 22/74, F01D 5/28, C09D 5/10

(54) **ALUMINIUMHALTIGE SCHUTZSCHICHT GEGEN KORROSION UND EROSION**
ANTI-CORROSION AND ANTI-EROSION PROTECTIVE COATING CONTAINING ALUMINIUM
COUCHE DE PROTECTION CONTENANT DE L'ALUMINIUM CONTRE LA CORROSION ET L'ÉROSION

(30) Priorität: 11.04.2012 EP 12163734
(43) Veröffentlichungstag der Anmeldung: 19.11.2014
(73) Patentinhaber: Siemens Aktiengesellschaft, 80333 München (DE)
(72) Erfinder: BARNIKEL, Jochen, 45470 Mülheim an der Ruhr (DE); GHICOV, Andrei, 45478 Mülheim an der Ruhr (DE); SCHMITZ, Friedhelm, 46537 Dinslaken (DE)
(86) Internationale Anmeldenummer: PCT/EP2013/056537
(87) Internationale Veröffentlichungsnummer: WO 2013/152953

(56) Entgegenhaltungen:
- EP-A1- 0 142 418
- WO-A1-94/08071
- US-A- 3 869 293
- SCHMITT-THOMAS KH G ET AL: "Investigation into the blasting wear resistance of materials and coatings using the fluidized bed process", WERKSTOFFE UND KORROSION 1990 NOV, Bd. 41, Nr. 11, November 1990 (1990-11), Seiten 623-634, XP002683281,

## Beschreibung

Die Erfindung betrifft eine aluminiumhaltige Schutzschicht gegen Korrosion und Erosion.
Verdichter-Schaufeln von stationären GT und Flugturbinen werden meist auf der Basis von vergüteten martensitischen 12% - 13%Cr-Stähle und zum Teil ausscheidungsgehärteten 16% - 17%Cr-Stähle hergestellt. Als Schutz gegen Korrosion werden die Schaufeln der vorderen Stufen mit einem speziellen Aluminium-pigmenthaltigen Hochtemperaturlack geschützt.Schichtsysteme mit Aluminiumpigmenten sind aus US-A-3 869 293 und EP-A-0 142 418 bekannt. Der Nachteil dieser Beschichtung besteht in der relativ geringen Erosionsbeständigkeit der Schicht. Als Folge davon ist neben einer sehr aufwändigen Filterung der Luft oft auch eine regelmäßige Neubeschichtung der Schaufeln (im Refurbishment) notwendig.
Zur Lösung dieses Problems werden die zurzeit verwendeten Schutzschichten in regelmäßigen Intervallen auf Erosionsabtrag und Korrosionsschutz inspiziert und im Refurbishment wird eine Entschichtung mit anschließender Neubeschichtung der Schaufeln mit dem gleichen System durchgeführt. Der Zeitraum dieser Intervalle ist stark von der Umgebungsluft und der Wirksamkeit von Filtereinrichtungen abhängig.
Dieses Problem soll gelöst werden.
Die Aufgabe wird gelöst durch ein Schichtsystem gemäß Anspruch 1.
Durch eine Erhöhung des Erosionswiderstandes der Beschichtung könnten die Refurbishment-Intervalle verlängert werden.
In den Unteransprüchen sind weitere vorteilhafte Maßnahmen aufgelistet, die beliebig miteinander kombiniert werden können um weitere Vorteile zu erzielen.

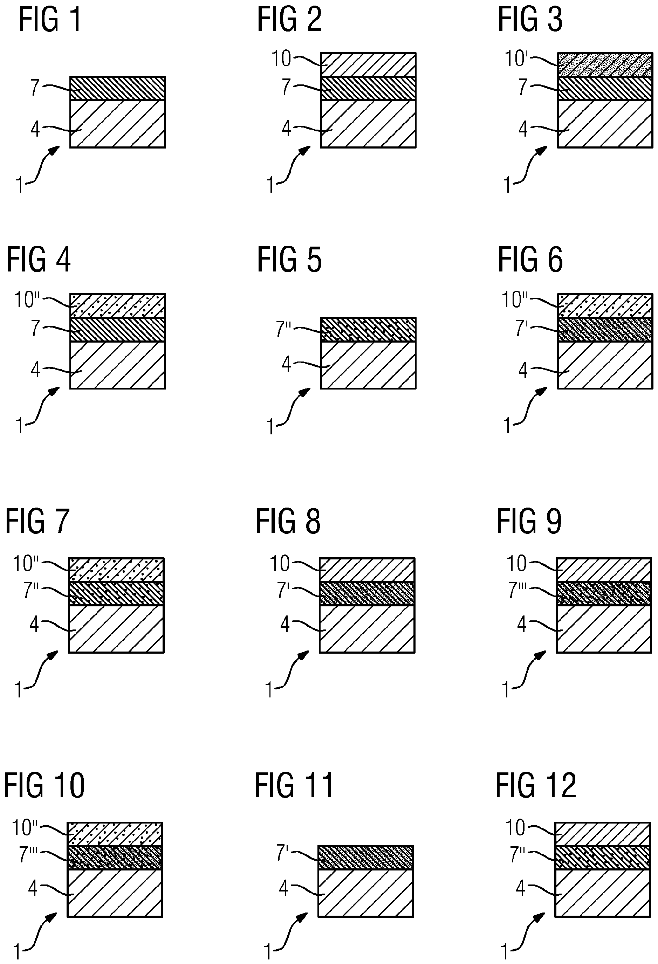

Es zeigen Figuren 1 - 28 Schichtsysteme.

Die Figuren und die Beschreibung stellen nur Ausführungsbeispiele der Erfindung dar.

Figur 1 zeigt ein Schichtsystem 1 aus einem Substrat 4 mit einer einzigen Schicht 7, die weiche Aluminiumpartikel Al mit einer Härte ≤ Hv50 enthält.
Vorzugsweise sind das härtere aluminiumhaltige Partikel AL* in einer Schicht 7' (Fig. 11).

Die einlagige Schicht 7" ausgehend von Figur 1 kann vorzugsweise zusätzlich noch Hartstoffpartikel (H) aufweisen, wie es in Figur 5 dargestellt ist.

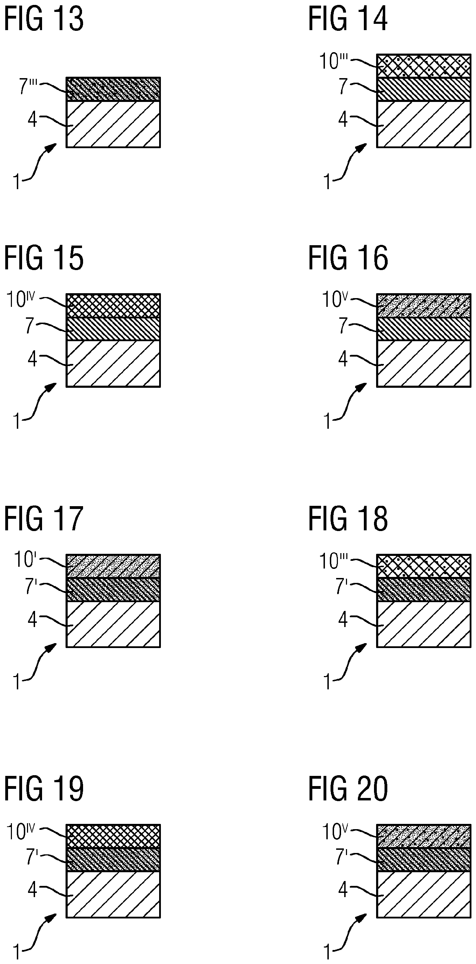

Dies gilt ebenso für eine einlagige Schicht 7"' gemäß Figur 13 ausgehend von Figur 11.

Figur 2 zeigt ein Schichtsystem 1 aus einem Substrat 4 mit einer zweilagigen Schutzschicht 7, 10 gegen Korrosion und Erosion (entspricht Figur 1 + äußere Schicht 10).
Nach diesem Stand der Technik weist die Schicht 7, die direkt auf dem stahlhaltigen Substrat 4 aufliegt, weiche Aluminiumpartikel Al auf und wirkt als Opferanode, wobei die obere Schicht 10 aber keine Aluminiumpartikel aufweist.
In Figur 2 sind in der unteren Schichten 7 die weichen Aluminiumpartikel Al vorhanden und die obere Schicht 10 weist keine Partikel auf, sondern nur ein Matrixmaterial.

Figur 8 stellt Figur 2 für härtere aluminiumhaltige Partikel AL* in der unteren Schicht 7' dar.

Zur Steigerung der Erosionsbeständigkeit können ausgehend von Figur 2 bzw. Figur 8 nur in der äußeren Schicht 10" ausschließlich Hartstoffpartikel H vorhanden sein, wie es in Figur 4 bzw. Figur 6 dargestellt ist.

Ein weiteres Ausführungsbeispiel der Erfindung besteht darin, in beide Schichten Aluminium einzubringen (Fig. 3), wobei jedoch in die untere Schicht 7 weichere Aluminiumpartikel Al ("reines" Aluminium) vorhanden ist und in der oberen Schicht 10' härtere aluminiumhaltige Partikel AL* vorhanden sind.

Je nach Anwendungsgebiet können in den unteren Schichten 7" bzw. 7"' und in der oberen Schicht 10', 10" gemäß Figur 7 ausgehend von Figur 2 bzw. gemäß Figur 10 (ausgehend von Fig. 8) oder nur in der oberen Schicht 10" (Fig. 4, 6) oder gemäß Figur 9 ausgehend von Figur 8 und gemäß Figur 12 ausgehend von Figur 2 nur in der unteren Schicht 7"', 7" Hartstoffpartikel H eingelagert sein.

Darüber hinaus kann die obere Schicht mit weichen Aluminiumpartikeln Al, härteren, aluminiumhaltigen Partikeln AL* und/oder Hartstoffpartikeln H ausgestaltet werden oder die obere Schicht 10^{IV} kann nur weiche Aluminiumpartikel aus Aluminium aufweisen oder die obere Schicht 10^{V} weist sowohl Hartstoffpartikel H als auch härtere aluminiumhaltige Partikel AL* auf.

In Figur 14 weist die untere Schicht 7 weiche Aluminiumpartikel Al und die obere Schicht 10"' ebenso aber auch Hartstoffpartikel H als Erosionsschutz auf.

In Figur 15 weist sowohl die untere Schicht 7 als auch die obere Schicht 10 ^{IV} Aluminiumpartikel auf, wobei in der äußeren Schicht 10^{IV} die Aluminiumpartikel zur Steigerung der Erosion genutzt werden, auch wenn sie in geringerem Maße zur Erosionsschutz dienen als Hartstoffpartikel.

In Figur 16 weist die untere Schicht 7 weiche Aluminiumpartikel Al auf und die obere Schicht 10^{V} härtere aluminiumhaltige Partikel AL* und Hartstoffpartikel H.

Figur 17 weist ausgehend von Figur 3 für die untere Schicht 7' keine Aluminiumpartikel auf, sondern härtere Aluminiumpartikel AL*.

Figur 18 zeigt eine untere Schicht 7' mit härteren aluminiumhaltigen Partikeln Al*, auf der eine obere Schicht 10"' mit weichen Aluminiumpartikeln Al und Hartstoffpartikel H aufgebracht ist.

In Figur 19 weist die untere Schicht 7' härtere aluminiumhaltige Partikel AL* auf, die dann zum Erosionsschutz beitragen, wenn die obere Schicht 10^{IV} abgetragen ist, da die obere Schicht 10^{IV} nur Aluminiumpartikel enthält.

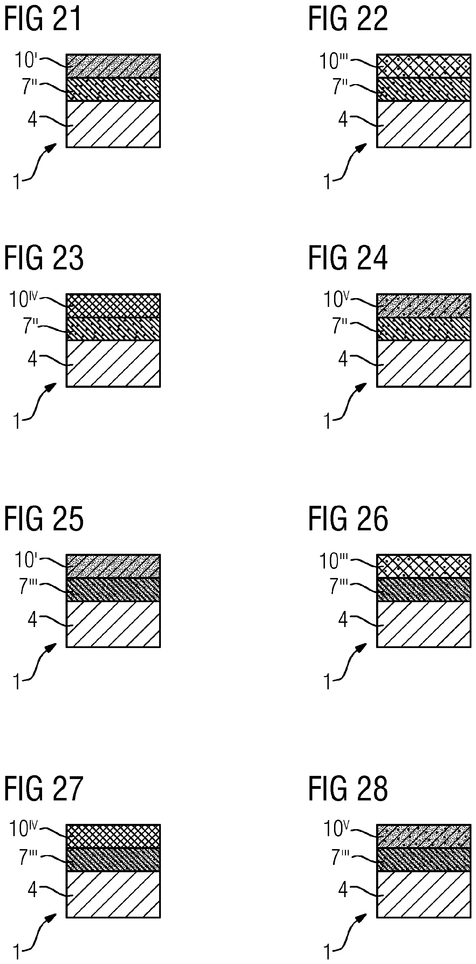

Den härtesten Erosionsschutz bildet eine obere Schicht 10^{V}, bei der härtere Aluminiumpartikel AL* und Hartstoffpartikel vorhanden sind, wobei je nach Anwendungsgebiet und Grad des Erosionsschutzes in der unteren Schicht 7' härtere Aluminiumpartikel AL* vorhanden sind (Fig. 20) oder in der unteren Schicht auch noch zusätzlich Hartstoffpartikel enthalten sind (Figur 28).

In Figur 21 - 24 weist die untere Schicht 7" Aluminiumpartikel und Hartstoffpartikeln H auf, um den Erosionswiderstand der unteren Schicht 7" zu steigern.

In Figur 21 sind härtere aluminiumhaltige Partikel AL* in der oberen Schicht 10' vorhanden, um sowohl zum Korrosionsschutz als auch zum Erosionsschutz beizutragen.

In Figur 22 wird das in der oberen Schicht 10"' mit weichen Aluminiumpartikeln Al und Hartstoffpartikeln H erreicht.

In weniger erosionsbelasteten Umgebungen, kann die obere Schicht 10^{IV} im Vergleich zu Figur 22 auch nur Aluminiumpartikel aufweisen (Figur 23).

Durch die obere Schicht 10^{V} mit aluminiumhaltigen härteren Partikeln Al* und Hartstoffpartikeln H wird insbesondere die äußere Schicht vor Erosion geschützt (Figur 24).

In den Figuren 25 - 28 weist die untere Schicht 7"' härtere aluminiumhaltige Partikel AL* und Hartstoffpartikel H auf, um das Substrat 4 auf jeden Fall vor Erosion zu schützen, wobei in Figur 25 in der oberen Schicht 10' härtere aluminiumhaltige Partikel AL* vorhanden sind und in Figur 26 der Erosionsschutz aber auch durch Hartstoffpartikel in der aluminiumhaltigen Schicht 10"' gewährleistet wird.

Figur 27 zeigt eine obere Schicht 10^{IV}, die weiche Aluminiumpartikel Al aufweist, die insbesondere auch zum Korrosionsschutz beiträgt und nur wenn die obere Schicht abgetragen ist die untere Schicht sowohl den Korrosionsschutz als auch den Erosionsschutz gewährleistet.

Als Hartstoffpartikel H können Keramikpartikel, vorzugsweise Aluminiumnitrid und Bornitrid, Chromkarbid, Aluminiumoxid oder Mischungen daraus verwendet werden.

Das Substrat 4 (Fig. 1 - 28) weist vorzugsweise einen Stahl auf.

Die erfindungsgemäße Steigerung der Erosion erfolgt durch Verwendung von härteren, aluminiumhaltigen Partikeln AL* aus einer Aluminiumlegierung, insbesondere ausscheidungsgehärteten Aluminiumlegierung, die eine 5-10-fach höhere Härte und einem mindestens Faktor 5 höhere Festigkeit aufweisen.

Vorzugsweise können als ausscheidungshärtende Legierungen aus Aluminium und zumindest einem Element der Gruppe Zn, Mg, Cu, Mn, Co insbesondere folgende Legierungen verwendet werden: Al-Zn, Al-Zn-Mn, Al-Mn-SC, Al-Mg-Mn, Al-Mg-Zn-Cu, Al-Cu-Mn-Zn, AlZn4, 5Mg1, AlZnMgCu1,5, Al2nMgCu0,5, AlMg4,5Mn. Es können aber auch Legierungen mit deutlich höheren Gehalten verschiedener Legierungselemente zur Anwendung gekommen, wie z.B. mit 6% - 8% Zink (Zn).

Ebenso vorzugsweise werden verwendet:
- Partikel AL* aus Aluminium-Verbundwerkstoffe aus Aluminium oder einer Aluminiumlegierung als Matrix: Al-Si, Al-Si-Mg, Al-Mn, Al-Fe, Al-Ni, Al-Zn mit einer eingelagerten zweiten Komponente, wie keramische Teilchen aus Al₂O₃ oder SiC
- Dispersionshärtende Aluminiumwerkstoffe mit Oxiden, Karbiden oder Nitriden (Al₂O₃, Al₄C₃) mit Lithium (Li) oder durch intermetallische Phasen: AlFe₈Co, AlFe₈Ce₄, AlFe₈Zr₁,
- Aluminide: insbesondere NiAl, Ni₃Al, FeAl, Fe₃Al, TiAl, Ti₃Al,
- Ausscheidungshärtende scandiumhaltige (Sc) Aluminiumlegierung Al-Sc oder Al-Sc-X-Legierungen,

Nach dem Einbrennen der Aluminiumpigmentschicht erfolgt in der Regel ein Leitfähigkeitsstrahlen mit geringer Intensität. Durch gezieltes Druckstrahlen mit optimierten Parametern lässt sich hingegen zusätzlich eine Härtesteigerung von Aluminiumpartikeln erzielen.

Das Matrixmaterial der Schichten 7, 7', 7", 7"', 10, 10', 10", 10"', 10^{IV}, 10^{V} (Fig. 1 - 28) ist vorzugsweise in Chromat-Phospat-Binder und vorzugsweise für beide Schichten gleich.

## Patentansprüche

1. Schichtsystem (1),
das zumindest aufweist:
ein Substrat (4),
eine untere Schicht (7, 7', 7", 7"'), die auf dem Substrat (4),
insbesondere direkt auf dem Substrat (4), vorhanden ist,
optional eine äußere Schicht (10, 10', 10", 10"', 10^{IV}, 10^{V}) auf der unteren Schicht (7, 7', 7", 7"'),
wobei in dem Schichtsystem (1) Partikel aus Aluminium (Al) mit einer weichen Härte vorhanden ist,
insbesondere mit einer Härte bis zu Hv50.
**dadurch gekennzeichnet,**
**dass** die Schicht (7, 7', 7", 7"', 10, 10', 10", 10"', 10^{IV}, 10^{V})
aluminiumhaltige Partikel (AL*) aufweist,
die härter ausgebildet sind als die Partikel aus Aluminium (Al),
**dass** die aluminiumhaltigen Partikel (AL*) eine Aluminiumlegierung oder Aluminium mit einem Härtungsmechanismus aufweisen,
insbesondere eine ausscheidungshärtende
Aluminiumlegierungbei dem die ausscheidungshärtenden aluminiumhaltigen Partikel (AL*)
Aluminium-Zink (Al-Zn) und/oder
Aluminium-Zink-Mangan (Al-Zn-Mn) und/oder
Aluminium-Mangan-Scandium (Al-Mn-Sc) und/oder
Aluminium-Magnesium-Mangan (Al-Mg-Mn) und/oder
Aluminium-Magnesium-Zink-Kupfer (Al-Mg-Zn-Cu) und/oder
Aluminium-Magnesium-Zink-Kupfer-Kobalt (Al-Mg-Zn-Cu-Co) und/oder
Aluminium-Kupfer-Mangan-Zink (Al-Cu-Mn-Zn) und/oder insbesondere folgende Legierungen:
Al₃Li und/oder
AlZn4, 5Mg1 und/oder
AlZnMgCu1,5 und/oder
AlZnMgCu0,5 und/oder
AlMg4,5Mn,
aufweisen,
ganz insbesondere daraus bestehen.

2. Schichtsystem nach Anspruch 1,
bei dem scandiumhaltige (Sc) Aluminiumlegierungen für die aluminiumhaltigen Partikel (AL*) verwendet werden,
insbesondere in Aluminium (Al) oder in Al-Legierungen:
Al-Sc, Al-Cu-Sc, Al-Si-Sc, Al-Mg-Si-Sc, Al-Zn-Mg-Sc, Al-Li-Sc und/oder Al-Mg-Sc.

3. Schichtsystem nach einem oder beiden der Ansprüche 1 oder 2,
bei dem dispersionshärtende Aluminium-Legierungen für die aluminiumhaltigen Partikel (AL*) verwendet werden,
insbesondere durch mechanisches Legieren hergestellte aluminiumhaltige Partikel (AL*).

4. Schichtsystem nach einem oder mehreren der Ansprüche 1 bis 3,
bei dem Aluminide als aluminiumhaltige Partikel (AL*) verwendet werden,
insbesondere NiAl, Ni₃Al, FeAl, Fe₃Al, TiAl, Ti₃Al, AlFe₈, AlFe₈Co, AlFe₈Ce₄ und/oder AlFe₈Zr₁.

5. Schichtsystem nach einem oder mehreren der Ansprüche 1, bis 4,
bei dem Aluminiumverbundwerkstoffe als aluminiumhaltige Partikel (AL*) verwendet werden:
Aluminium (Al) oder Aluminiumlegierung
insbesondere in Legierungen Al-Si, Al-Si-Mg, Al-Mn, Al-Fe, Al-Mn-Fe, Al-Ni, Al-Zn,
mit einer eingelagerten härteren keramischen Komponente, insbesondere mit Oxiden oder Nitriden,
ganz insbesondere mit Al₂O₃, Al₄C₃ und/oder SiC.

6. Schichtsystem nach einem oder mehreren der Ansprüche 1 bis 5,
das nur eine untere Schicht (7, 7', 7", 7"') aufweist.

7. Schichtsystem nach einem oder mehreren der Ansprüche 1 bis 5,
das zumindest aufweist:
eine untere Schicht (7, 7', 7", 7"') und
eine äußere Schicht (10, 10', 10", 10'", 10^{IV}, 10^{V}), insbesondere nur eine untere (7, 7', 7", 7"') und nur
eine äußere Schicht (10, 10', 10", 10"', 10^{IV}, 10^{V}).

8. Schichtsystem nach Anspruch 7,
bei dem in der unteren Schicht (7) weiche Aluminiumpartikel (AL),
insbesondere mit einer maximalen Härte von Hv50, vorhanden sind und
in der oberen Schicht (10', 10^{V})
um mindestens 10% härtere Aluminiumpartikel (AL*),
insbesondere ausscheidungshärtende Aluminiumlegierungspartikel (AL*) vorhanden sind.

9. Schichtsystem nach einem oder mehreren der Ansprüche 1 bis 8,
bei dem in der unteren Schicht (7", 7"') Hartstoffpartikel (H) vorhanden sind.

10. Schichtsystem nach einem oder mehreren der Ansprüche 1 bis 9,
wobei in der oberen Schicht (10", 10"', 10^{V}) Hartstoffpartikel (H) vorhanden sind.

11. Schichtsystem nach einem oder beiden der Ansprüche 9 oder 10,
bei dem in beiden Schichten (7", 7"', 10", 10"', 10^{V}) Hartstoffpartikel (H) vorhanden sind.

12. Schichtsystem nach einem oder mehreren der Ansprüche 9, 10 oder 11,
bei dem als Hartstoffpartikel (H) Aluminiumnitrid, Bornitrid, Chromkarbid, Aluminiumoxid oder Mischungen daraus verwendet werden.

13. Schichtsystem nach einem oder mehreren der Ansprüche 1 bis 12,
bei dem die Schicht (7, 7', 7", 7"', 10, 10', 10", 10'", 10^{IV}, 10^{V}) oder beide Schichten (7,7', 7", 7'", 10, 10', 10", 10"', 10^{IV}, 10^{V}) das gleiche Matrixmaterial aufweisen,
insbesondere Chromatphosphatbinder.

14. Schichtsystem mit einem oder mehreren der vorherigen Ansprüche,
bei dem die obere Schicht (10) keine aluminiumhaltige Partikel (AL*) oder Aluminiumpartikel (AL) aufweist.

15. Schichtsystem nach einem oder mehreren der vorherigen Ansprüche,
bei dem das Substrat (4) ein Stahl aufweist.

16. Schichtsystem nach einem oder mehreren der vorherigen Ansprüche,
wobei die Aluminiumpartikel durch Leitfähigkeitsstrahlen, insbesondere durch Kaltfestigungsverfahren, wie z.B. Strahlen oder Rollieren, eine Härtesteigerung erfahren haben.

## Claims

1. Layer system (1)
which comprises at least:
a substrate (4),
a lower layer (7, 7', 7", 7'")
which is present on the substrate (4),
in particular directly on the substrate (4),
optionally an outer layer (10, 10', 10", 10''', 10^{IV}, 10^{V}) on the lower layer (7, 7', 7", 7"'),
wherein particles composed of aluminium (Al) having a soft hardness, in particular a hardness of up to Hv50, are present in the layer system (1),
**characterized in that**
the layer (7, 7', 7", 7"', 10, 10', 10", 10"', 10^{IV}, 10^{V}) comprises aluminium-containing particles (AL*) which are harder than the particles composed of aluminium (Al) and
**in that** the aluminium-containing particles (AL*) comprise an aluminium alloy or aluminium having a hardening mechanism,
in particular a precipitation-hardening aluminium alloy wherein the precipitation-hardening aluminium-containing particles (AL*) comprise, very particularly preferably consist of,
aluminium-zinc (Al-Zn) and/or
aluminium-zinc-manganese (Al-Zn-Mn) and/or
aluminium-manganese-scandium (Al-Mn-Sc) and/or
aluminium-magnesium-manganese (Al-Mg-Mn) and/or
aluminium-magnesium-zinc-copper (Al-Mg-Zn-Cu) and/or
aluminium-magnesium-zinc-copper-cobalt (Al-Mg-Zn-Cu-Co) and/or
aluminium-copper-manganese-zinc (Al-Cu-Mn-Zn) and/or
in particular the following alloys:
Al₃Li and/or
AlZn4.5Mg1 and/or
AlZnMgCu1.5 and/or
AlZnMgCu0.5 and/or
AlMg4.5Mn.

2. Layer system according to Claim 1,
wherein scandium-containing (Sc) aluminium alloys are used for the aluminium-containing particles (AL*), in particular in aluminium (Al) or in Al alloys:
Al-Sc, Al-Cu-Sc, Al-Si-Sc, Al-Mg-Si-Sc, Al-Zn-Mg-Sc, Al-Li-Sc and/or Al-Mg-Sc.

3. Layer system according to one or both of Claims 1 and 2, wherein dispersion-hardening aluminium alloys are used for the aluminium-containing particles (AL*), in particular aluminium-containing particles (AL*) produced by mechanical alloying.

4. Layer system according to one or more of Claims 1 to 3, wherein aluminides are used as aluminium-containing particles (AL*),
in particular NiAl, Ni₃Al, FeAl, Fe₃Al, TiAl, Ti₃Al, AlFe₈, AlFe₈Co, AlFe₈Ce₄ and/or AlFe₈Zr₁.

5. Layer system according to one or more of Claims 1 to 4, wherein aluminium composites are used as aluminium-containing particles (AL*):
aluminium (Al) or an aluminium alloy,
in particular in alloys Al-Si, Al-Si-Mg, Al-Mn, Al-Fe, Al-Mn-Fe, Al-Ni, Al-Zn,
with an incorporated harder ceramic component, in particular with oxides or nitrides,
very particularly preferably with Al₂O₃, Al₄C₃ and/or SiC.

6. Layer system according to one or more of Claims 1 to 5, which has only a lower layer (7, 7', 7", 7"').

7. Layer system according to one or more of Claims 1 to 5, which comprises at least:
a lower layer (7, 7', 7", 7"') and
an outer layer (10, 10', 10", 10'", 10^{IV}, 10^{V}),
in particular only one lower layer (7, 7', 7", 7"') and
only one outer layer (10, 10', 10", 10'", 10^{IV}, 10^{V}).

8. Layer system according to Claim 7,
wherein soft aluminium particles (Al), in particular having a maximum hardness of Hv50, are present in the lower layer (7) and
aluminium particles having an at least 10% greater hardness (AL*), in particular precipitation-hardening aluminium alloy particles (AL*) are present in the upper layer (10', 10^{V}).

9. Layer system according to one or more of Claims 1 to 8, wherein hard material particles (H) are present in the lower layer (7", 7"').

10. Layer system according to one or more of Claims 1 to 9, wherein hard material particles (H) are present in the upper layer (10", 10'", 10^{V}).

11. Layer system according to one or both of Claims 9 and 10, wherein hard material particles (H) are present in both layers (7", 7"', 10", 10"', 10^{V}).

12. Layer system according to one or more of Claims 9, 10 and 11,
wherein aluminium nitride, boron nitride, chromium carbide, aluminium oxide or mixtures thereof are used as hard material particles (H).

13. Layer system according to one or more of Claims 1 to 12,
wherein the layer (7, 7', 7", 7"', 10, 10', 10", 10"', 10^{IV}, 10^{V}) or both layers (7, 7', 7", 7'", 10, 10', 10", 10"', 10^{IV}, 10^{V}) have the same matrix material,
in particular chromate-phosphate binder.

14. Layer system according to one or more of the preceding claims,
wherein the upper layer (10) does not comprise any aluminium-containing particles (AL*) or aluminium particles (Al).

15. Layer system according to one or more of the preceding claims,
wherein the substrate (4) comprises a steel.

16. Layer system according to one or more of the preceding claims,
wherein the aluminium particles have experienced an increase in hardness as a result of conductivity blasting, in particular as a result of cold strengthening processes, e.g. particle blasting or rolling.

## Revendications

1. Système (1) de couches,
qui a au moins :
un substrat (4),
une couche (7, 7', 7", 7"') inférieure,
qui est présente sur le substrat (4),
en étant notamment directement sur le substrat (4),
facultativement une couche (10, 10', 10", 10"', 10^{IV}, 10^{V}) extérieure sur la couche (7, 7', 7", 7"') inférieure,
dans lequel il y a, dans le système (1) de couches, des particules en aluminium (Al), ayant une dureté tendre,
en ayant notamment une dureté allant jusqu'à Hv50.
**caractérisé**
**en ce que** la couche (7, 7', 7", 7"', 10, 10', 10", 10"', 10^{IV}, 10^{V})
a des particules (AL*) contenant de l'aluminium, qui sont plus dures que les particules en aluminium (Al),
**en ce que** les particules (AL*) contenant de l'aluminium ont un alliage d'aluminium ou de l'aluminium ayant un mécanisme de durcissement,
notamment un alliage d'aluminium durci par précipitation, dans lequel les particules (AL*) contenant de l'aluminium durci par précipitation ont
de l'aluminium-zinc (Al-Zn) et/ou
de l'aluminium-zinc-manganèse (Al-Zn-Mn) et/ou
de l'aluminium-manganèse-scandium (Al-Mn-Sc) et/ou
de l'aluminium-magnésium-manganèse (Al-Mg-Mn) et/ou
de l'aluminium-magnésium-zinc-cuivre (Al-Mg-Zn-Cu) et/ou
de l'aluminium-magnésium-zinc-cuivre-cobalt (Al-Mg-Zn-Cu-Co) et/ou
de l'aluminium-cuivre-manganèse-zinc (Al-Cu-Mn-Zn) et/ou notamment les alliages suivants :
Al₃Li et/ou
AlZn4,5Mgl et/ou
AlZnMgCul,5 et/ou
AlZnMgCu0,5 et/ou
AlMg4,5Mn,
ou, d'une manière tout à fait particulière, en sont constituées.

2. Système de couches suivant la revendication 1,
dans lequel des alliages d'aluminium contenant du scandium (Sc) sont utilisés pour les particules (AL*) contenant de l'aluminium, notamment dans de l'aluminium (Al) ou dans des alliages d'Al : Al-Sc, Al-Cu-Sc, Al-Si-Sc, Al-Mg-Si-Sc, Al-Zn-Mg-Sc, Al-Li-Sc et/ou Al-Mg-Sc.

3. Système de couches suivant l'une ou les deux des revendications 1 ou 2,
dans lequel des alliages d'aluminium durcis par dispersion sont utilisés pour les particules (AL*) contenant de l'aluminium, notamment des particules (AL*) contenant de l'aluminium produites par alliage mécanique.

4. Système de couches suivant l'une ou plusieurs des revendications 1 à 3,
dans lequel des aluminures sont utilisées comme particules (AL*) contenant de l'aluminium,
notamment NiAl, Ni₃Al, FeAl, Fe₃Al, TiAl, Ti₃Al, AlFe₈, AlFe₈Co, AlFe₈Ce₄ et/ou AlFe₈Zr₁.

5. Système de couches suivant l'une ou plusieurs des revendications 1 à 4,
dans lequel des matériaux composites d'aluminium sont utilisés comme particules (Al*) contenant de l'aluminium :
de l'aluminium (Al) ou un alliage d'aluminium,
notamment dans des alliages Al-Si, Al-Si-Mg, Al-Mn, Al-Fe, Al-Mn-Fe, Al-Ni, Al-Zn,
ayant un composant céramique incorporé plus dur,
ayant notamment des oxydes ou des nitrures,
ayant tout particulièrement de l'Al₂O₃, de l'Al₄C₃ et/ou du SiC.

6. Système de couches suivant l'une des revendications 1 à 5, qui n'a qu'une couche (7, 7', 7", 7"') inférieure.

7. Système de couches suivant l'une des revendications 1 à 5, caractérisé en qu'il a au moins :
une couche (7, 7', 7", 7"') inférieure et
une couche (10, 10', 10", 10"', 10^{IV}, 10^{V}) extérieure,
en n'ayant notamment qu'une couche inférieure (7, 7', 7", 7"') et qu'une couche (10, 10', 10", 10'", 10^{IV}, 10^{V}) extérieure.

8. Système de couches suivant la revendication 7,
dans lequel il y a, dans la couche (7) inférieure, des particules (AL) d'aluminium tendre,
ayant notamment une dureté maximum de Hv50 et
dans la couche (10', 10^{V}) supérieure,
des particules (AL*) d'aluminium plus dures d'au moins 10%,
notamment des particules (AL*) d'alliage d'aluminium durci par précipitation.

9. Système de couches suivant l'une ou plusieurs des revendications 1 à 8,
dans lequel il y a, dans la couche (7", 7"') inférieure, des particules (H) de matière dure.

10. Système de couches suivant l'une ou plusieurs des revendications 1 à 9,
dans lequel il y a, dans la couche (10", 10"', 10^{V}) supérieure, des particules (H) de matière dure.

11. Système de couches suivant l'une ou les deux des revendications 9 ou 10,
dans lequel il y a, dans les deux couches (7", 7"', 10", 10"', 10^{V}), des particules (H) de matière dure.

12. Système de couches suivant l'une ou plusieurs des revendications 9, 10 ou 11,
dans lequel il est utilisé, comme particules (H) de matière dure, du nitrure d'aluminium, du nitrure de bore, du carbure de chrome, de l'oxyde d'aluminium ou leurs mélanges.

13. Système de couches suivant l'une ou plusieurs des revendications 1 à 12,
dans lequel la couche (7, 7', 7", 7"', 10, 10', 10", 10"', 10^{IV,} 10^{V}) ou les deux couches (7, 7', 7", 7"', 10, 10', 10", 10"', 10^{IV,} 10^{V}) ont le même matériau de matrice, notamment un liant au chromate phosphate.

14. Système de couches suivant l'une ou plusieurs des revendications précédentes,
dans lequel la couche (10) supérieure n'a pas de particule (AL*) contenant de l'aluminium, ou de particule (AL) d'aluminium.

15. Système de couches suivant l'une ou plusieurs des revendications précédentes,
dans lequel le substrat (4) a un acier.

16. Système de couches suivant l'une ou plusieurs des revendications précédentes,
dans lequel les particules d'aluminium ont subi, par grenaillage conducteur, notamment par un procédé de traitement à froid comme par exemple un grenaillage ou un moletage, une augmentation de dureté.
